# EUROPEAN PATENT SPECIFICATION

(11) **EP 4 421 249 B1**
(45) Date of publication and mention of the grant of the patent: **26.11.2025**
(21) Application number: 23158444.2
(22) Date of filing: 24.02.2023
(51) Int. Cl.: E02F 9/26, G01S 7/497

(54) **MINING VEHICLE CALIBRATION**
KALIBRIERUNG EINES BERGBAUFAHRZEUGS
ÉTALONNAGE DE VÉHICULE D'EXPLOITATION MINIÈRE

(43) Date of publication of application: 28.08.2024
(73) Proprietor: Sandvik Mining and Construction Oy, 33330 Tampere (FI)
(72) Inventor: Snellman, Olli, 33330 Tampere (FI); Svensberg, Ville, 33330 Tampere (FI)
(74) Representative: Sandvik

(56) References cited:
- US-A1- 2013 173 109
- US-A1- 2017 089 041
- US-A1- 2018 142 441

## Description

### FIELD

The present invention relates to calibration of mining vehicles, and further to verifying a calibration related action for a mining vehicle.

### BACKGROUND

Mining or construction excavation worksites, such as underground hard rock or soft rock mines, may comprise areas for automated operation of mining vehicles, such as load and/or haul machines and drilling rigs. Such mining vehicles may be an unmanned vehicle, for example remotely monitored and/or controlled from a control room, or a manned vehicle, such as a vehicle operated by an operator in a cabin of the vehicle. Mining vehicles may be configured to perform at least some tasks autonomously. For example, an automated mining loader may be configured to perform an autonomous load and haul procedure comprising loading a bucket, driving from a loading site to an unloading site, unloading the bucket, and returning from the unloading site to the loading site.

A worksite and the autonomously operating vehicles at the worksite may comprise a large number of mobile and fixed sensors continuously collecting data related to or affecting operations in the mine operations. Such data may be referred to as mining operations data and may comprise, for example, vehicle operations status data, such as speed, position at worksite, motor parameter, load, etc., and/or environment data, such as temperature, air condition etc. The data may be transferred to a data processing system, which may be configured to provide a mine operations control system, comprising a user interface for a user of the system, which may be referred to as an operator. Positions of vehicles performing their drive orders may be indicated for the operator monitoring the vehicles and manually controlling a vehicle when needed. Worksites may be very large and complex with a fleet of simultaneously operating vehicles monitored by the operator.

Calibration actions may need to be performed for mining vehicles to ensure appropriate operation particularly in case of autonomously operating vehicles. For example, sensors and/or actuators of movable mining vehicle components may need to be periodically calibrated. Calibration actions may be performed periodically or after a predetermined number of working hours or movement actions has been performed, for example. Calibration of a mining vehicle typically requires manual verification, which may involve ensuring that boom, bucket or box movement is possible without physical limitations. A method for calibrating and recalibrating a vehicle model used to autonomously control a machine on a worksite is for example disclosed in document US 2013/173109 A1.

### SUMMARY

The invention is defined by the features of the independent claims. Some specific embodiments are defined in the dependent claims.

According to a first aspect, there is provided an apparatus for a mining vehicle comprising a body, an actuator, a work implement, and a scanner, wherein the actuator is connected to the work implement and the body and adapted to change position of the work implement in respect to the body, the apparatus comprising means for or configured to cause the apparatus at least to: performing a calibration action of a calibration procedure for the mining vehicle, receiving scanning data of the calibration action on the basis of environment scanning performed by the scanner of the calibration action, wherein the scanning data is indicative of at least one position of a work implement portion of the work implement in relation to a body portion of the body, receiving calibration verification reference data indicative of at least one of a calibration target position of the work implement portion in relation to the body portion for the calibration action or target movement range of the work implement portion in relation to the body portion for the calibration action, processing the scanning data and the calibration verification reference data to determine at least one of a deviation of current position of the work implement portion from the calibration target position or a deviation of current range of movement of the work implement portion from the target movement range; and verifying the calibration procedure on the basis of the determined at least one deviation.

According to a second aspect, there is provided a method for a mining vehicle comprising a body, an actuator, a work implement, and a scanner, wherein the actuator is connected to the work implement and the body and adapted to change position of the work implement in respect to the body, the method comprising: performing a calibration action of a calibration procedure for the mining vehicle, receiving scanning data of the calibration action on the basis of environment scanning performed by the scanner of the calibration action, wherein the scanning data is indicative of at least one position of a work implement portion of the work implement in relation to a body portion of the body, receiving calibration verification reference data indicative of at least one of a calibration target position of the work implement portion in relation to the body portion for the calibration action or target movement range of the work implement portion in relation to the body portion for the calibration action, processing the scanning data and the calibration verification reference data to determine at least one of a deviation of current position of the work implement portion from the calibration target position or a deviation of current range of movement of the work implement portion from the target movement range; and verifying the calibration procedure on the basis of the determined at least one deviation.

The means of the apparatus of the first aspect may comprise at least one processor and at least one memory including computer program code, the at least one memory and the computer program code configured to, with the at least one processor, cause the apparatus to perform the method of the second aspect. The means may comprise one or more processors and memory comprising instructions, when executed by the one or more processors, cause the apparatus to perform the method.

Embodiments of the method include various embodiments of the apparatus of the first aspect, some of which are illustrated in dependent apparatus claims.

According to a third aspect, there is provided an apparatus comprising at least one processor, at least one memory including computer program code, the at least one memory and the computer program code being configured to, with the at least one processor, cause the apparatus at least to perform the method or an embodiment of the method.

According to a fourth aspect, there is provided a computer program, a computer program product or a tangible or non-tangible computer-readable medium comprising computer program code for, when executed in a data processing apparatus, to cause the apparatus to perform the method or an embodiment thereof.

### BRIEF DESCRIPTION OF THE DRAWINGS

FIGURE 1 illustrates an example of an example of a mining vehicle;
FIGURE 2 illustrates a method in accordance with some embodiments;
FIGURE 3 illustrates functions of a control unit in accordance with some embodiments;
FIGURES 4a and 4b illustrate side views of a mining vehicle performing a calibration action; and
FIGURE 5 illustrates an example apparatus capable of supporting at least some embodiments.

### EMBODIMENTS

The presently disclosed embodiments are applicable, in particular, to various mining vehicles used in mining industry, such as underground or surface mines or construction sites. The mining vehicle may be suitable for loading, transporting and unloading excavated material or other bulk material. Particular examples of such mining vehicles include dumpers and loading equipment or loaders comprising a bucket attached to a boom. The excavated material may, for example, be rocks excavated in a surface or underground operating area. In this context, the term "rock" is to be understood broadly to cover also a boulder, rock material, crust and other relatively hard material. Some other examples of mining vehicles include drilling rigs comprising one or more booms, feed beam connected to each of the booms, and a drilling unit (comprising a drilling machine) attached to the feed beam.

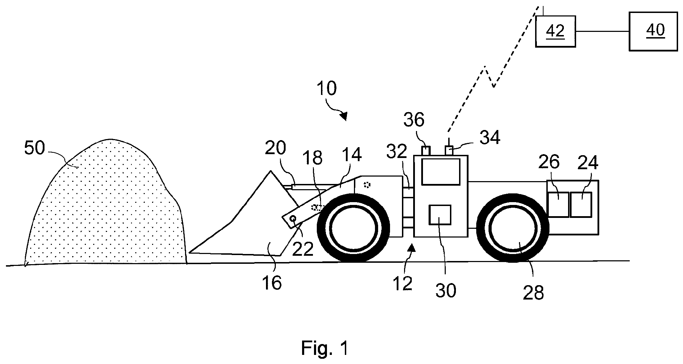

Figure 1 shows an example of a mining vehicle 10 comprising a (mobile) carrier 12, one or more booms 14 and a bucket 16 attached in a pivotable or otherwise movable manner to the one or more booms 14. For example, the bucket 16 may be coupled to two booms 14. The attachment may comprise at least one pivot 22, and the bucket 16 may be turned with respect to the pivot(s). The mining vehicle may be an articulated vehicle comprising two sections connected by a joint 32. The mining vehicle may be a load and haul (LHD) vehicle, or a vehicle mainly intended for loading.

The mining vehicle 10 further comprises a first actuator 18 for moving the boom 14 upwards and downwards, and a second actuator 20 for turning the bucket 16 in respect to the pivot 22. The actuators 18, 20 may be hydraulically and/or electrically operable actuators, or operable by some other source of energy. It should also be noted that Figure 1 is simplified and, for example, the first actuator 18 and/or the second actuator 20 may in practise comprise more than one actuator. For example, a lever arm arrangement may be applied for connecting a cylinder to the bucket 16.

The mining vehicle 10 may comprise a system of pumps 24 for generating hydraulic pressure for operating various parts of the machine, such as lifting the boom 14, turning the bucket, 16 etc. The mining vehicle 10 may comprise one or more other sources of energy, such as an accumulator, a hydrogen container, a fuel tank, etc.

The mining vehicle 10 comprises at least one motor 26, such as an electric motor or a combustion motor. Power from the motor 26 may be provided by a crank shaft (not shown) to front and/or rear wheels 28 either directly or via a gear box (not shown).

The mining vehicle 10 comprises at least one control unit 30. The control unit may comprise one or more processors and memory, configured to control at least some functions and/or actuators of the mining vehicle. In some embodiments, the control unit 30 is configured to control at least calibration control related operations, and there may be one or more other control units in the mining vehicle for controlling other operations. It is to be appreciated that the control unit 30 may be configured to perform at least some of the below illustrated features, or a plurality of control units or controllers may be applied to perform these features. There may be further operations modules or functions performed by the control unit(s), for example, an automatic bucket loading module, at least one positioning module, autonomous driving control module, and/or an obstacle detection module.

The mining vehicle 10 may be an automated mining vehicle, which in its autonomous operating mode may operate/drive independently without requiring continuous user control. However, the mining vehicle may be taken under external control during states of emergencies, for example.

The mining vehicle 10 may comprise at least one wireless data transfer unit 34, which may be connected to the control unit 30. The control unit 30 may be configured to control the data transfer unit 34 to establish a data transmission connection to another (second) control system 40 external to the mining vehicle 10, via an underlying wireless connection provided by a base station or access node 42. The data transfer unit 34 may thus be connected to a communications system of the worksite, such as a wireless access system comprising a wireless local area network (WLAN) and/or a cellular communications network. For example, the data transfer unit 34 may be configured to communicate with a 4G, 5G, 6G or another generation cellular network.

The control system 40 may comprise or be connected to a further network(s) and/or data processing system(s), such a worksite management system, a cloud service, a data analytics device/system, an intermediate communications network, such as the internet, etc. The system may comprise or be connected to further device(s) or control unit(s), such as a handheld user unit, a vehicle unit, a worksite management device/system, a remote control and/or monitoring device/system, data analytics device/system, sensor system/device, etc.

A control device, such as a server, of the system 40 may be configured to manage at least some operations at the worksite. The control device may be configured to provide a user interface for an operator to remotely monitor and, when needed, control automatic operation of the mining vehicles and/or assign work orders for a fleet of vehicles. For example, the control device may be configured to instruct a mining vehicle to repeatedly perform an autonomous loading and hauling cycle, and update and/or monitor such work order performance and status. Thus, the mining vehicle 10 may be unmanned, and the user interface may be remote from the mining vehicle. The mining vehicle may be remotely monitored or controlled by an operator in proximity to the mining vehicle, or in control room at the worksite or even long distance away from the worksite via communications network(s).

The mining vehicle 10 may comprise a positioning system or unit. At surface-operated mining vehicles, it may be possible to use satellite-based navigation, such as the GPS system, for determining the location and orientation of the mining vehicle with sufficient accuracy. With underground-operating mining vehicles, instead of satellite based positioning information, positioning based on dead-reckoning and/or scanning tunnel surfaces may be used.

The mining vehicle 10 may comprise one or more scanning units, or scanners 36, configured to perform scanning of the environment of the mining vehicle. The scanner may be an imaging unit, a radar, a sonar unit, or a light detecting and ranging (LIDAR) unit, a microwave or magnetic field based scanning unit, or another type of environment scanning unit. In an embodiment, the scanner 36 may be a 2D or 3D scanner, such as a LIDAR device, configured to monitor tunnel walls. The control unit 30 may be configured to compare scanned tunnel profile data to reference profile data stored in an environment model and position the mining vehicle on the basis of finding a match in the environment model. The control unit 30 may be configured to correct positioning by dead-reckoning based on scanning based positioning. In some embodiments, the scanning results are applied to detect position and orientation of the mining vehicle and one or more further elements thereof, such as a position of the scanner 36 or a leading edge or another portion of the bucket 16.

Apparatuses of the worksite, such as the control device(s) of the control system 40 and the mining vehicles 10, may be configured to store and use at least one worksite model representing current state and/or target state of the worksite environment. The worksite model may be an environment model or map. The worksite model may be 2D model or 3D model, for example. In the case of an underground worksite, the worksite model may be indicative of tunnel profiles and may be referred to as a tunnel model. In some embodiments, the control system is configured to store a 3D (tunnel) model of the worksite, illustrating floors, walls, and ceilings of a tunnel network.

In some embodiments, the scanner is a 3D scanner, in which case 3D scanning data, for example point cloud data, is produced. The scanner may be a laser scanner or another type of sensor device, such as 4D or another type of radar, appropriate for determining obstacles and distances to obstacles for the vehicle.

In some embodiments, the worksite model comprises point cloud data generated on the basis of scanning the worksite. A point cloud is a collection of data points defined by a given coordinates system. In a 3D coordinates system, for example, a point cloud may define the profile of the underground tunnel network. The 3D model may comprise or be formed based on point cloud data generated on the basis of scanning the tunnel system.

The control device may be configured to generate and/or update the worksite model, in some embodiments based on point cloud data received from mining vehicles or other apparatuses comprising an environment scanning device. For navigation purposes, it is possible to generate a 3D model by combining depth measurements from a high-density scanner, such as a LIDAR unit. The 3D model may be stored in a database accessible by one or more modules of a computing apparatus, such as a tunnel model processing module, a user interface or visualizer module, a route planning module, and/or a positioning service module. The vehicle may comprise a simultaneous localization and mapping (SLAM) unit configured to both position the vehicle and (augment) map the environment on the basis of (2D or 3D) scanning information while the vehicle is driving.

A mining vehicle, such as the vehicle 10, may be provided with an obstacle detection function or unit, which may be part of a collision avoidance or prevention system. The obstacle detection function may be configured to perform collision examination based on scanning data received from at least scanner 36 configured to perform scanning of the environment of the vehicle. For example, one scanner may cover a rear portion of the vehicle and another scanner may cover a front section of the vehicle by directional beams. The obstacle detection may apply one or more obstacle detection or safety areas around the vehicle. If an object is detected as an obstacle in the area, the vehicle may be stopped.

In some embodiments, the mining vehicle 10 is configured to, on the basis of scanning data from at least one scanner 36, detect position and orientation of the vehicle and one or more further elements thereof, such as the scanner or a bucket. A control unit in the vehicle, such as the control unit 30, may be configured to compare operational scanned tunnel profile data to reference profile data stored in the tunnel model. The control unit may be configured to position the vehicle on the basis of finding a match in the environment model. Position and direction of an interest point of the vehicle, such as the (leading edge of the) tool, may be determined in the machine coordinate system, and further in the mine coordinate system on the basis of the detected matching between the operational point cloud data and the reference cloud data.

A driving plan, or a route plan, may define a route to be driven by the mining vehicle 10 and may be used as an input for automatic control of the mining vehicle. The plan may define a start point, an end point, and a set of route points for the automatic drive. In the case of a vehicle as illustrated in Figure 1, the driving plan may comprise information of a loading area or point and may comprise data for controlling loading of the bucket 16. Automated loading may be initiated in response to the mining vehicle entering a position or route point of a loading area in the driving plane. During automated bucket loading procedure, the mining vehicle 10 be configured to perform autonomously a sequence of appropriate movements to fill the bucket 16 and complete the loading by positioning the bucket at a position appropriate for leaving a pile 50 and hauling the load to an unloading location. The drive to the unloading site and the unloading may also be automated.

Various elements of the mining vehicle 10 may need to be calibrated. This is particularly important for autonomously operating vehicles. For example, sensors and/or actuators 16, 18 of movable mining vehicle components may need to be repetitively calibrated to ensure appropriate operation of the vehicle, such as the vehicle 10, which may be configured to perform an autonomous loading and/or hauling procedure. The mining vehicle may be configured to perform a calibration procedure, which may comprise a set of calibration actions. For example, the mining vehicle may be configured to perform a calibration action, such as movement of the bucket to uppermost position to calibrate actuators 16, 18.

There are now provided improvements for automatically verifying a calibration procedure, based on utilizing environment scanning for the verification. The improvements facilitate to avoid or reduce need for manual verification and reduce time required for calibration, enabling to increase production efficiency.

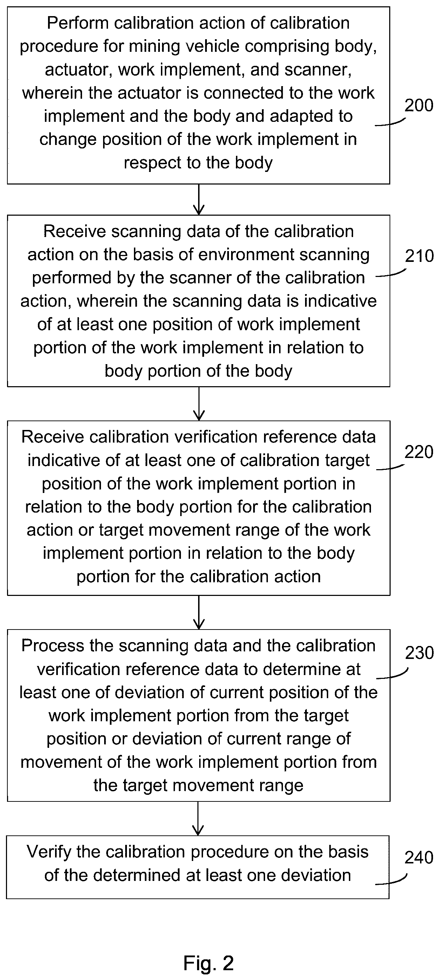

Figure 2 illustrates a method according to some embodiments. The method may be performed by an apparatus, in some embodiments a control apparatus configured to control at least calibration verification. The method and the various embodiments thereof may be performed by a mining vehicle and a controlling apparatus thereof, such as the mining vehicle 10, and by the control unit 30 thereof, respectively. The method may be a computer-implemented method.

The method comprises performing 200 a calibration action of a calibration procedure for a mining vehicle comprising a body, an actuator, a work implement, and a scanner, wherein the actuator is connected to the work implement and the body and adapted to change position of the work implement in respect to the body.

Block 210 comprises receiving scanning data of the calibration action on the basis of environment scanning performed by the scanner of the calibration action. The scanning data is indicative of at least one position of a work implement portion of the work implement in relation to a body portion of the body.

Block 220 comprises receiving calibration verification reference data indicative of at least one of a calibration target position of the work implement portion in relation to the body portion for the calibration action or target movement range of the work implement portion in relation to the body portion for the calibration action.

Block 230 comprises processing the scanning data and the calibration verification reference data to determine at least one of a deviation of current position of the work implement portion from the target position or a deviation of current range of movement of the work implement portion from the target movement range. The current position may refer to position of the work implement after performing the calibration action, or to an intermediate position during the calibration action. The current position and the current range of movement may be determined based on processing the scanning data, and may also be referred to as scanning-based position or scanning-based range of movement, respectively.

Block 240 comprises verifying the calibration procedure on the basis of the determined at least one deviation. The verification may comprise comparing the deviation(s) to predetermined difference threshold parameter(s) of the reference data to validate the calibration. The threshold parameter(s) may define acceptance margin(s) for calibration validation.

If the deviation exceeds the respective threshold parameter, the calibration action does not meet the verification criteria and is rejected or discarded. If the deviation meets criteria for calibration verification or validation, for example does not exceed maximum deviation value, the calibration action may be approved and the calibration procedure may be confirmed as successfully verified. It is to be noted that the calibration procedure may comprise a set of multiple calibration actions, and blocks 210 to 230 may be repeated for each calibration action of the set. Block 240 may comprise checking if each of the calibration actions meets associated criteria.

The apparatus configured to perform the method may be configured to generate and transmit a control message indicative of the failed or successful calibration action to a control unit, such as the control unit 30. Based on the control message, the control unit may generate a UI control signal to inform an operator and/or initiate a further control action, such as a new calibration action or procedure in response to a failed calibration action.

Calibration may refer generally to comparison of measurement values provided by a device being tested with preconfigured reference (measurement) values, such as calibration standard values. The mining vehicle may be configured to perform a calibration procedure, which may comprise a set of calibration actions. The calibration actions may comprise, for example, controlling the work implement, such as a bucket, to a particular calibration target position, performing a measurement by a measurement device, providing measurement value(s) from the measurement device to a controller, and comparing the measurement value(s) to a prestored reference value(s) by the controller. The calibration procedure may further comprise corrective action(s) after block 240, to adjust sensor and/or actuator value(s) on the basis of the deviation(s).

The calibration action may thus refer to a specific action performed by the mining vehicle or a controller thereof, such as providing a control signal for an actuator of the work implement. The control signal may be indicative of the calibration target position or comprise control data for the actuator that should enable the work implement to arrive at the calibration target position. The calibration action may comprise controlling the work implement to perform a trajectory from a start position to the calibration target position. Calibration actions and the procedure may be needed after a predetermined time period has elapsed after previous calibration or after a predetermined number of working hours or movement actions has been performed, for example. The mining vehicle may be configured to initiate the calibration procedure and the calibration action (and enter block 200) automatically. The mining vehicle may be configured to perform a check routine to detect if a calibration procedure triggering criterion is met, such as the predefined time or working hours.

The scanning data of the calibration action may refer to data generated based on environment scanning during and/or after the calibration action. The scanner is positioned and configured such that the scanning comprises an area in which the work implement portion and the body portion are visible.

The apparatus may be configured to process the scanning data in block 230 to determine one or more positional differences between the work implement portion and the body portion, to determine the current position of the work implement in relation to the body portion and/or the range of movement of the work implement in relation to the body portion. The determined positional difference(s) may be compared to one or more calibration target positional parameters of or based on the reference data in block 230. The positional parameters may comprise the calibration target position of the work implement portion in relation to the body portion for the calibration action and/or the target movement range of the work implement portion in relation to the body portion for the calibration action. The calibration verification reference data may be indicative of at least one reference positional difference or a set of positional differences between the work implement portion and the body portion at the target position of the work implement portion. Block 240 may thus comprise comparing the determined deviation(s) to the reference difference(s).

The apparatus may be configured to verify 240 the calibration procedure (as successful or accepted) in response to the deviation not exceeding an associated threshold value, which may be indicated by the calibration verification reference data. The calibration verification may thus comprise checking based on the scanning that the work implement has reached (close enough) the calibration target position and is thus within an allowed tolerance for the calibration target position, and/or that the range of movement of the work implement is within an allowed deviation from the target movement range. Block 240 may thus comprise checking if the work implement is within an allowed position range around the target position indicated by the calibration verification reference data.

The calibration verification reference data may, depending on the applied processing embodiment and/or scanner type, comprise reference value(s) for the target position and/or target range, image data indicative of the target position or the target range, real-time sensor value information and/or point cloud data or other type of reference environment scanning data indicative of position(s) of the work implement in respect to the body at the calibration target position or during the target movement range. As already indicated, the verification reference data may further comprise threshold values(s).

The reference data may comprise or be supplemented with position sensor data from a position sensor of or associated with the work implement, the position sensor data being indicative of position of the work implement in relation to the body portion. Such real-time information may be received from a memory or a bus of the mining vehicle. The apparatus may be configured to process the position sensor data and the scanning data to determine the deviation in block 230. For example, boom or bucket orientation relative to a body portion based on processing the scanning data and boom or bucket orientation sensor value from a boom position sensor after performing the calibration action are compared to verify the calibration.

The scanning data may comprise scanned point cloud data. The apparatus may be configured to process the point cloud data, in block 230 or a further preceding step, to determine the position(s) of the work implement portion in relation to the body portion. The positional difference(s) between the work implement portion and the body portion may be compared to reference value(s) of the reference data or based on processing the reference data.

The scanning data and the calibration verification reference data may comprise point cloud data. Block 230 may thus comprise:
- receiving reference point cloud data of the work implement portion and the body portion,
- processing the scanned point cloud data and the scanned reference point cloud data to perform point cloud matching operation to detect the work implement portion and the body portion in the scanned point cloud data, and
- processing the scanned point cloud data to determine the deviation of block 230, in some embodiments a distance between the detected work implement portion and the body portion in the scanned point cloud data.

In this embodiment, the reference point cloud data may be a pre-calibrated point cloud data set, indicative of the specific position (e.g. an extreme position) at which the work implement portion should be in relation to the body portion.

The calibration verification reference data may comprise non-point cloud data. The apparatus may be configured to process the scanned point cloud data and position sensor data from a position sensor of the work implement to determine the deviation in block 230. The apparatus may be configured to process the position sensor data and the point cloud data to determine the deviation in block 230. Thus, the reference data does not have to comprise reference point cloud data, but position or movement detected based on scanning data received from the scanner may be instantly compared to the sensor data. For example, boom position based on processing point cloud data and boom orientation sensor value from a boom position sensor after performing the calibration action are applied to detect the need for calibration. Hence, the calibration action may be detected to fail when the boom should be at its uppermost position based on the sensor data from the control system, but based on the processing the scanning data the apparatus detects that the boom has not reached its uppermost position.

The apparatus may be configured to determine the deviation(s) in block 230 based on image processing. Thus, an image based on the scanning data may be compared to a reference image of the calibration verification reference data. The scanning data may comprise image data or be processed to generate image data. The calibration verification reference data may comprise reference image data indicative of the target position of the work implement portion in relation to the body portion at the calibration target position and/or the target movement range. Block 230 may thus comprise processing the image data of the scanning data and the reference image data to determine the at least one deviation.

The apparatus may be configured to process the image data to detect the work implement portion in an image or a set of images based on the scanning and in a reference image of the calibration verification reference data. The deviation(s) are based on detected difference(s) of the work implement portion in the image based on the scanning data and in the reference image. Visual reference data may thus be stored within factory calibration, and used as the calibration verification reference data.

It is to be appreciated that the calibration verification reference data may comprise other than image data, such as point cloud data. The processing in block 230 may comprise comparing positional difference(s) (between the work implement portion and the body portion) based on image analysis of the scanning data to reference value(s) of the reference data or based on processing the reference data.

The scanning data may be indicative of an obstacle. The apparatus may be configured to determine, based on processing the scanning data, such as point cloud data indicative of the obstacle and the work implement, a position of the obstacle and a position of the work implement in relation to the obstacle. The apparatus may process the scanning data to determine if the work implement is or will be unable to reach the calibration target position or perform the target movement range. This determination may thus be performed before or after block 200. In an example, the determination is performed if on the basis of blocks 230 and 240 the calibration action failed, due to the deviation exceeding an associated threshold value. Based on processing the point cloud data, the position of the obstacle may be compared to a position of the work implement. The compared position of the work implement may thus be the position at which the work implement is detected during or after the calibration action, or a position to which the work implement is on the basis of the reference data expected to arrive after performing the calibration action.

The apparatus may be configured to, in response to detecting that the work implement is unable to reach the calibration target position or perform the target movement range due to the obstacle, control change of the calibration target position or the target movement range. The target position or the target movement range may be determined based on obstacle position information and vehicle dimensions data. The apparatus may be configured to control the mining vehicle to perform a second calibration action based on the changed calibration target position or the target movement range. The calibration procedure may then be verified based on processing scanning data of the second calibration action and the changed calibration target position or the target movement range. In another example, there may be a further input causing the change of the calibration target position or the target movement range and the second calibration action, such as a control signal in response to detecting the work implement to hit an obstacle. In another embodiment, instead of changing the target position or the target movement range, the mining vehicle may be controlled to drive to another position at the worksite, at which there is no obstacle preventing to reach the target position or to perform the target movement range. These features enable to automatically adapt the calibration procedure to physical limitations of the current operating environment.

Time required for calibration verification can thus be reduced as compared to conventional manual verification. Maximum range of movement of the work implement is not required, and the calibration and verification thereof can be performed also in tight worksite portions, such as in low profile tunnels, at which the work implement would hit the tunnel roof at upmost position. Thus, calibration verification can be performed despite external physical limitations, and the vehicle does not need to be driven away from its production position or area.

Some further examples are provided below with references to a mining vehicle, such as the vehicle 10, being configured to perform at least some of the above-illustrated features. However, it is to be appreciated that at least some features of the method and at least some embodiments thereof may be implemented by a control apparatus, which may be outside the mining vehicle, for example by a control device of the control system 40 controlling a set of mining vehicles. Such control apparatus may perform the method and embodiments thereof based on information received from the mining vehicle, such as the scanning data.

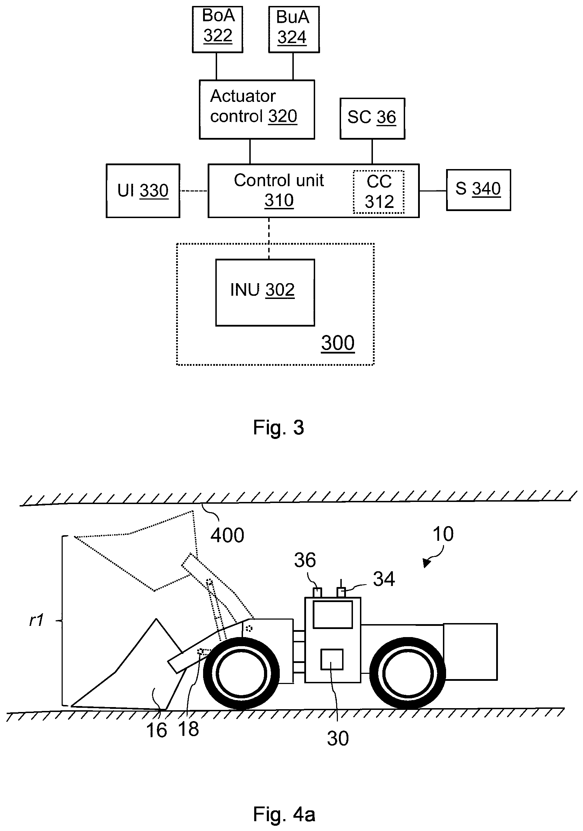

Figure 3 illustrates an arrangement and elements of a mining vehicle, such as the mining vehicle 10, configured to perform a calibration procedure, the method of Figure 2, and at least some embodiments thereof. In this example, a driveline 300 of the mining vehicle comprises an electric motor, such as the motor 26, driven by an inverter unit (INU) 302. The INU 302 comprises an inverter, which at least in some instances may also be referred to as frequency converter, alternative current (AC) drive, variable speed drive (VSD), or variable frequency drives (VFD), controlling the voltage and frequency of power supplied to an AC motor to control the torque and rotation speed of the motor.

A control system or unit 310, such as the control unit 30, may be the apparatus configured to perform at least some features related to the method of Figure 2. The control unit 310 may be configured to perform a calibration control (CC) function or routine 312 performing the method and at least some embodiments of the method. The control unit 310 may comprise one or more computing units/processors executing computer program code stored in memory. The control unit may be connected to one or more other control units of a control system of the mining vehicle, in some embodiments by a controller area network (CAN) bus.

The control unit 310 may be connected to an actuator control unit or (sub)system 320, which may be connected to boom actuator (BoA) 322 and bucket actuator (BuA) 324. The control unit 310 may be configured to transmit, in or for block 200, control signals in accordance with the calibration procedure and action being performed to the actuator control system 320. The control system 320 controls the BoA 322 and BuA 324 based on the control signals to accordingly control the boom 14 and the bucket 16. It is to be noted that the boom and the bucket may have separate actuator controls, which may be directly connected to the control unit 310. An actuator control (sub)system may comprise or be connected to hydraulic circuits having lift and tilt actuator control valves for controlling the rate at which pressurized hydraulic fluid flows to respective lift and tilt hydraulic actuators in proportion to control signals.

The control unit 310 may be connected to one or more scanners 36. The control unit 310 may be configured to receive and process scanning data from the scanner(s) 36. A user interface (UI) 330 may be connected to the control unit 310, locally at the mining vehicle or via communications unit(s). The UI may comprise, for example, a joystick, a touch screen, or other input means by which an input signal from a user may be provided to the control unit for controlling the mining vehicle and calibration related actions thereof.

The control unit 310 may be directly or indirectly connected to further units in the mining vehicle, such as further sensors or sensor systems 340 configured to provide inputs for the control unit 310. Examples of such sensors include boom or bucket limit sensors, boom or bucket position detection sensors, hydraulic pressure sensors, and bucket pressure measurement sensors. The control unit may be connected to elements of the driveline, such as INU 302 or another motor control unit, a motor, or a sensor in the driveline. The control unit may be connected to a communications unit and comprise or be connected to a memory or a bus, from which the calibration verification reference data can be received.

The calibration action may comprise controlling the work implement portion to perform a trajectory from a start position to the calibration target position. The calibration verification reference data may define one or more threshold parameters to determine allowed deviation of the work implement portion from the calibration target position after performing the calibration action, or the allowed deviation of the range of movement during the calibration action from the target movement range.

Figure 4a illustrates an example in which the calibration action comprises the bucket 16 moving range r1 from lowermost position (illustrated by solid line) to uppermost position (illustrated by the dashed line). The lowermost position may represent the calibration start point and the uppermost position may represent the calibration target position, or vice versa.

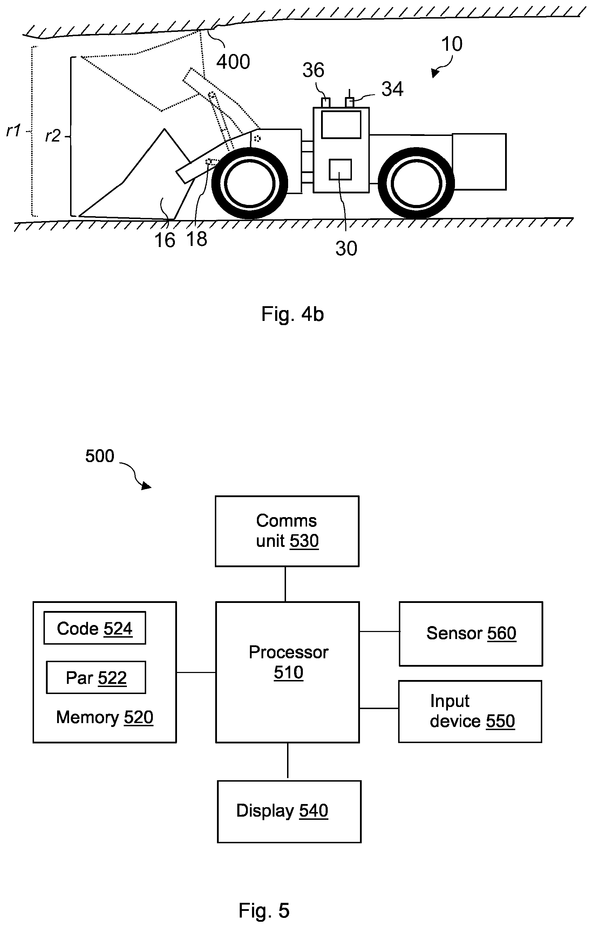

In the example of Figure 4a, the bucket is able to move the entire r1 required for verifying the calibration procedure. However, in some instances there may be obstacle(s) preventing the work implement to reach the calibration target position or perform the target movement range. For example, in Figure 4b the tunnel roof 400 may prevent the range of movement to r2, and hence prevent reaching the uppermost position or moving the entire range r1. In the example of Figure 4b, the calibration target position or the target movement range may be changed to avoid the bucket 16 hitting the tunnel roof 400 or from r1 to r2 or less than r2, respectively.

It is to be appreciated that various further features may be complement or differentiate at least some of the above-illustrated embodiments. For example, there may be further user interaction and/or automation functionality further assisting the operator to monitor the calibration procedure and/or control calibration verification procedure.

The mining vehicle 10 of Figure 1 and the arrangement of Figure 3 are disclosed herein only as examples where the embodiments disclosed herein may be implemented. The embodiments are applicable to various other types and configurations of mining vehicles and control units. Above some example embodiments are illustrated, at least some of which may be performed by the control unit 30, 310 as the performing apparatus, for example.

An electronic device comprising electronic circuitries may be an apparatus for realizing at least some embodiments illustrated above, such as the method illustrated in connection with Figure 2 and features illustrated for the control unit 30, 310. The apparatus may be comprised in at least one computing device connected to or integrated into a control system of the mining vehicle. Such control system may be an intelligent on-board control system controlling operation of various sub-systems of the mining vehicle, such as a hydraulic system, a motor, etc, in one example the sub-systems illustrated in Figure 3. Such control systems are often distributed and include many independent modules connected by a bus system of CAN nodes, for example.

Figure 5 illustrates a simplified example apparatus capable of supporting at least some embodiments of the present invention. Illustrated is a device 500, which may be configured to carry out at least some of the embodiments relating to controlling calibration related features of a mining vehicle as illustrated above. In some embodiments, the device 500 comprises or implements the control unit 30 or 310, or other module(s), functions and/or unit(s) for performing at least some of the above-illustrated embodiments.

Comprised in the device 500 is a processor 510, which may comprise, for example, a single- or multi-core processor. The processor 510 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 500 may comprise memory 520. The memory may comprise random-access memory and/or permanent memory. The memory may be at least in part accessible to the processor 510. The memory may be at least in part comprised in the processor 510. The memory may be at least in part external to the device 500 but accessible to the device. The memory 520 may be means for storing information, such as parameters 522 affecting operations of the device. The parameter information in particular may comprise parameter information affecting the calibration control related features, such as threshold values.

The memory 520 may be a non-transitory computer readable medium comprising computer program code 524 including computer instructions that the processor 510 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the presently disclosed method steps in the device.

The device 500 may comprise a communications unit 530 comprising a transmitter and/or a receiver. The transmitter and the receiver may be configured to transmit and receive, respectively, for example data and control commands within or outside the mining vehicle. The transmitter and/or receiver may be configured to operate in accordance with wideband code division multiple access, WCDMA, long term evolution, LTE, 3GPP new radio access technology (N-RAT), wireless local area network, WLAN, and/or Ethernet standards, for example.

The device 500 may comprise or be connected to a UI. The UI may comprise at least one of a display 540, a speaker, an input device 550 such as a keyboard, a joystick, a touchscreen, and/or a microphone. The UI may be configured to display views on the basis of above illustrated embodiments. A user may operate the device and control at least some of above illustrated features. In some embodiments, the user may control the mining vehicle 10 via the UI, for example to manually drive the vehicle, operate a boom, initiate automatic loading, change mode, change parameter set, change display views, modify parameters 522, etc.

The device 500 may further comprise and/or be connected to further units, devices and systems, such as one or more sensor devices 560 configured to detect environment of the device 500 or properties of the mining vehicle.

The processor 510, the memory 520, the communications unit 530 and the UI may be interconnected by electrical leads internal to the device 500 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected.

The apparatus, such as the device 500, the mining vehicle 10, the control unit 30 or 310, may be configured to: perform a calibration action of a calibration procedure for the mining vehicle, receiving scanning data of the calibration action on the basis of environment scanning performed by the scanner of the calibration action, wherein the scanning data is indicative of at least one position of a work implement portion of the work implement in relation to a body portion of the body, receive calibration verification reference data indicative of at least one of a calibration target position of the work implement portion in relation to the body portion for the calibration action or target movement range of the work implement portion in relation to the body portion for the calibration action, process the scanning data and the calibration verification reference data to determine at least one of a deviation of current position of the work implement portion from the calibration target position or a deviation of current range of movement of the work implement portion from the target movement range; and verify the calibration procedure on the basis of the determined at least one deviation.

The calibration action may comprise controlling the work implement portion to perform a trajectory from a start position to the calibration target position. The calibration verification reference data may define one or more threshold parameters to determine allowable deviation of the work implement portion from the calibration target position after performing the calibration action.

The scanning data may be indicative of an obstacle and the apparatus may be configured to determine if the work implement is able to reach the calibration target position or perform the target movement range despite the obstacle.

The apparatus may be configured to, in response to detecting that the work implement is unable to reach the calibration target position or perform the target movement range due to the obstacle, control change of the calibration target position or the target movement range. The apparatus may be configured to control the mining vehicle to perform a second calibration action based on the changed calibration target position or the target movement range. The apparatus may be configured to verify the calibration procedure based on processing scanning data of the second calibration action and the changed calibration target position or the target movement range.

The apparatus may be configured to determine positional difference between the work implement portion and the body portion on the basis of processing the scanning data. The apparatus may be configured to verify the calibration procedure on the basis of the determined positional difference and the calibration verification reference data.

The scanning data may comprise scanned point cloud data. The determining the at least one deviation may comprise:
- receiving reference point cloud data of the work implement portion and the body portion,
- processing the scanned point cloud data and the scanned reference point cloud data to perform point cloud matching operation to detect the work implement portion and the body portion in the scanned point cloud data, and
- processing the scanned point cloud data to determine a distance between the detected work implement portion and the body portion in the scanned point cloud data.

The scanning data and the calibration verification reference data may comprise image data. The processing the scanning data and calibration verification reference data comprises processing the image data to:
- detect the work implement portion in an image of the scanning data and in a reference image of the calibration verification reference data, and
- determine the deviation based on detected difference of the work implement portion within the image of the scanning data and within the reference image.

The reference data may comprise position sensor data from a position sensor of the work implement. The position sensor data may be indicative of position of the work implement in relation to the body portion.

The work implement may comprises a bucket or platform of a load and/or haul vehicle. The mining vehicle may be an autonomously driving vehicle and the apparatus may be configured to perform the calibration procedure to perform autonomous driving of the mobile mining vehicle.

While the forgoing examples are illustrative of the principles of the present invention in one or more particular applications, it will be apparent to those of ordinary skill in the art that numerous modifications in form, usage and details of implementation can be made, the invention being defined in the appended claims.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus for a mining vehicle (10) comprising a body, an actuator, a work implement, and a scanner (36), wherein the actuator is connected to the work implement and the body and adapted to change position of the work implement in respect to the body, the apparatus comprising at least one processor and at least one memory including computer program code, the at least one memory and the computer program code configured to, with the at least one processor, cause the apparatus at least to:
- perform a calibration action of a calibration procedure for the mining vehicle,
- receive scanning data of the calibration action on the basis of environment scanning performed by the scanner of the calibration action, wherein the scanning data is indicative of at least one position of a work implement portion of the work implement in relation to a body portion of the body,
- receive calibration verification reference data indicative of at least one of a calibration target position of the work implement portion in relation to the body portion for the calibration action or a target movement range of the work implement portion in relation to the body portion for the calibration action,
- process the scanning data and the calibration verification reference data to determine at least one of a deviation of current position of the work implement portion from the calibration target position or a deviation of current range of movement of the work implement portion from the target movement range; and
- verify the calibration procedure on the basis of the determined at least one deviation.

2. The apparatus of claim 1, wherein the calibration action comprises controlling the work implement portion to perform a trajectory from a start position to the calibration target position, and the calibration verification reference data defines one or more threshold parameters to determine allowable deviation of the work implement portion from the calibration target position after performing the calibration action.

3. The apparatus of claim 1 or 2, wherein the scanning data is indicative of an obstacle and the at least one memory and the computer program code are configured to, with the at least one processor, cause the apparatus to determine if the work implement is able to reach the calibration target position or perform the target movement range despite the obstacle.

4. The apparatus of claim 3, wherein the at least one memory and the computer program code are configured to, with the at least one processor, cause the apparatus to, in response to detecting that the work implement is unable to reach the calibration target position or perform the target movement range due to the obstacle, control change of the calibration target position or the target movement range, control the mining vehicle to perform a second calibration action based on the changed calibration target position or the target movement range, and verify the calibration procedure based on processing scanning data of the second calibration action and the changed calibration target position or the target movement range.

5. The apparatus of preceding claim, wherein the at least one memory and the computer program code are configured to, with the at least one processor, cause the apparatus to
- determine positional difference between the work implement portion and the body portion on the basis of processing the scanning data, and
- verify the calibration procedure on the basis of the determined positional difference and the calibration verification reference data.

6. The apparatus of any preceding claim, wherein the scanning data comprises scanned point cloud data and determining the at least one deviation comprises:
- receiving reference point cloud data of the work implement portion and the body portion,
- processing the scanned point cloud data and the scanned reference point cloud data to perform a point cloud matching operation to detect the work implement portion and the body portion in the scanned point cloud data, and
- processing the scanned point cloud data to determine a distance between the detected work implement portion and the body portion in the scanned point cloud data.

7. The apparatus of any preceding claim 1 to 4, wherein the scanning data and the calibration verification reference data comprise image data, and
the processing the scanning data and calibration verification reference data comprises processing the image data to:
- detect the work implement portion in an image of the scanning data and in a reference image of the calibration verification reference data, and
- determine the deviation based on detected difference of the work implement portion within the image of the scanning data and within the reference image.

8. The apparatus of any preceding claim, wherein the reference data comprises position sensor data from a position sensor of the work implement, the position sensor data being indicative of position of the work implement in relation to the body portion.

9. The apparatus of any preceding claim, wherein the work implement comprises a bucket or platform of a load and/or haul vehicle, and the mining vehicle is an autonomously driving vehicle and the apparatus is configured to perform the calibration procedure to perform autonomous driving of the mobile mining vehicle.

10. A method for a mining vehicle (10) comprising a body, an actuator, a work implement, and a scanner (36), wherein the actuator is connected to the work implement and the body and adapted to change position of the work implement in respect to the body, the method comprising:
- performing a calibration action of a calibration procedure for the mining vehicle,
- receiving scanning data of the calibration action on the basis of environment scanning performed by the scanner of the calibration action, wherein the scanning data is indicative of at least one position of a work implement portion of the work implement in relation to a body portion of the body,
- receiving calibration verification reference data indicative of at least one of a calibration target position of the work implement portion in relation to the body portion for the calibration action or a target movement range of the work implement portion in relation to the body portion for the calibration action,
- processing the scanning data and the calibration verification reference data to determine at least one of a deviation of current position of the work implement portion from the calibration target position or a deviation of current range of movement of the work implement portion from the target movement range; and
- verifying the calibration procedure on the basis of the determined at least one deviation.

11. The method of claim 10, wherein the calibration action comprises controlling the work implement portion to perform a trajectory from a start position to the calibration target position, and the calibration verification reference data defines one or more threshold parameters to determine allowable deviation of the work implement portion from the calibration target position after performing the calibration action.

12. The method of claim 10 or 11, wherein the scanning data is indicative of an obstacle, the method further comprising:
- determining if the work implement is able to reach the calibration target position or perform the target movement range despite the obstacle, and
- in response to detecting that the work implement is unable to reach the calibration target position or perform the target movement range due to the obstacle, control change of the calibration target position or the target movement range, control the mining vehicle to perform a second calibration action based on the changed calibration target position or the target movement range, and verify the calibration procedure based on processing scanning data of the second calibration action and the changed calibration target position or the target movement range.

13. The method of any preceding claim, further comprising: determining positional difference between the work implement portion and the body portion on the basis of processing the scanning data, and verifying the calibration procedure on the basis of the determined positional difference and the calibration verification reference data.

14. The method of any preceding claim, wherein the scanning data comprises scanned point cloud data and determining the at least one deviation comprises:
- receiving reference point cloud data of the work implement portion and the body portion,
- processing the scanned point cloud data and the scanned reference point cloud data to perform point cloud matching operation to detect the work implement portion and the body portion in the scanned point cloud data,
- processing the scanned point cloud data to determine a distance between the detected work implement portion and the body portion in the scanned point cloud data.

15. A computer program comprising code for, when executed in a data processing apparatus, to cause the apparatus for performing the method of any one of claims 10 to 14.

## Patentansprüche

1. Einrichtung für ein Bergbaufahrzeug (10), die eine Karosserie, einen Stellantrieb, ein Arbeitsgerät und einen Scanner (36) umfasst, wobei der Stellantrieb mit dem Arbeitsgerät und der Karosserie verbunden ist und dazu angepasst ist, die Position des Arbeitsgeräts in Bezug auf die Karosserie zu ändern, wobei die Einrichtung mindestens einen Prozessor und mindestens einen Speicher einschließlich einem Computerprogrammcode umfasst, wobei der mindestens eine Speicher und der Computerprogrammcode so konfiguriert sind, dass sie zusammen mit dem mindestens einen Prozessor die Einrichtung mindestens veranlassen zum:
- Durchführen einer Kalibrierungsaktion eines Kalibrierungsvorgangs für das Bergbaufahrzeug,
- Empfangen von Scandaten der Kalibrierungsaktion auf der Grundlage eines Umgebungsscans, das durch den Scanner der Kalibrierungsaktion durchgeführt wird, wobei die Scandaten mindestens eine Position eines Arbeitsgerätabschnitts des Arbeitsgeräts in Bezug auf einen Karosserieabschnitt der Karosserie anzeigen,
- Empfangen von Kalibrierungsüberprüfung-Referenzdaten, die mindestens eines einer Kalibrierungszielposition des Arbeitsgerätabschnitts in Bezug auf den Karosserieabschnitt für die Kalibrierungsaktion oder eines Zielbewegungsbereichs des Arbeitsgerätabschnitts in Bezug auf den Karosserieabschnitt für die Kalibrierungsaktion anzeigen,
- Verarbeiten der Scandaten und der Kalibrierungsüberprüfung-Referenzdaten, um mindestens eine einer Abweichung der aktuellen Position des Arbeitsgerätabschnitts von der Kalibrierungszielposition oder einer Abweichung des aktuellen Bewegungsbereichs des Arbeitsgerätabschnitts von dem Zielbewegungsbereich zu bestimmen; und
- Überprüfen des Kalibrierungsvorgangs auf der Grundlage der bestimmten mindestens einen Abweichung.

2. Einrichtung nach Anspruch 1, wobei die Kalibrierungsaktion das Steuern des Arbeitsgerätabschnitts umfasst, um eine Trajektorie von einer Startposition zu der Kalibrierungszielposition durchzuführen, und die Kalibrierungsüberprüfung-Referenzdaten einen oder mehrere Schwellenparameter definieren, um die zulässige Abweichung des Arbeitsgerätabschnitts von der Kalibrierungszielposition nach Durchführen der Kalibrierungsaktion zu bestimmen.

3. Einrichtung nach Anspruch 1 oder 2, wobei die Scandaten ein Hindernis anzeigen und der mindestens eine Speicher und der Computerprogrammcode dazu konfiguriert sind, mit dem mindestens einen Prozessor die Einrichtung zu veranlassen zu bestimmen, ob das Arbeitsgerät in der Lage ist, die Kalibrierungszielposition zu erreichen oder den Zielbewegungsbereich trotz des Hindernisses durchzuführen.

4. Einrichtung nach Anspruch 3, wobei der mindestens eine Speicher und der Computerprogrammcode dazu konfiguriert sind, mit dem mindestens einen Prozessor die Einrichtung zu veranlassen, als Reaktion auf das Erkennen, dass das Arbeitsgerät aufgrund des Hindernisses nicht in der Lage ist, die Kalibrierungszielposition zu erreichen oder den Zielbewegungsbereich durchzuführen, eine Änderung der Kalibrierungszielposition oder des Zielbewegungsbereichs zu steuern, das Bergbaufahrzeug derart zu steuern, dass es eine zweite Kalibrierungsaktion basierend auf der geänderten Kalibrierungszielposition oder dem Zielbewegungsbereich durchführt, und den Kalibrierungsvorgang basierend auf dem Verarbeiten von Scandaten der zweiten Kalibrierungsaktion und der geänderten Kalibrierungszielposition oder des Zielbewegungsbereichs zu überprüfen.

5. Einrichtung nach einem vorstehenden Anspruch, wobei der mindestens eine Speicher und der Computerprogrammcode konfiguriert sind, um mit dem mindestens einen Prozessor die Einrichtung zu veranlassen:
- Bestimmen des Positionsunterschieds zwischen dem Arbeitsgerätabschnitt und dem Karosserieabschnitt auf der Grundlage der Verarbeitung der Scandaten, und
- Überprüfen der Kalibrierungsvorgang auf der Grundlage des bestimmten Positionsunterschieds und der Kalibrierungsüberprüfung-Referenzdaten.

6. Einrichtung nach einem vorstehenden Anspruch, wobei die Scandaten gescannte Punktwolkendaten umfassen und das Bestimmen der mindestens einen Abweichung Folgendes umfasst:
- Empfangen von Referenz-Punktwolkendaten des Arbeitsgerätabschnitts und des Karosserieabschnitts,
- Verarbeiten der gescannten Punktwolkendaten und der gescannten Referenz-Punktwolkendaten, um einen Punktwolken-Abgleichvorgang durchzuführen, um den Arbeitsgerätabschnitt und den Karosserieabschnitt in den gescannten Punktwolkendaten zu erkennen, und
- Verarbeiten der gescannten Punktwolkendaten, um einen Abstand zwischen dem erkannten Arbeitsgerätabschnitt und dem Karosserieabschnitt in den gescannten Punktwolkendaten zu bestimmen.

7. Einrichtung nach einem vorstehenden Anspruch 1 bis 4, wobei die Scandaten und die Kalibrierungsüberprüfung-Referenzdaten Bilddaten umfassen, und
das Verarbeiten der Scandaten und der Kalibrierungsüberprüfung-Referenzdaten das Verarbeiten der Bilddaten umfasst zum:
- Erkennen des Arbeitsgerätabschnitts in einem Bild der Scandaten und in einem Referenzbild der Kalibrierungsüberprüfung-Referenzdaten, und
- Bestimmen der Abweichung basierend auf den erkannten Unterschieden des Arbeitsgeräteabschnitts innerhalb des Bildes der Scandaten und innerhalb des Referenzbildes.

8. Einrichtung nach einem vorstehenden Anspruch, wobei die Referenzdaten Positionssensordaten von einem Positionssensor des Arbeitsgeräts umfassen, wobei die Positionssensordaten die Position des Arbeitsgeräts in Bezug auf den Karosserieabschnitt anzeigen.

9. Einrichtung nach einem vorstehenden Anspruch, wobei das Arbeitsgerät eine Schaufel oder Plattform einer Last und/oder ein Transportfahrzeugs umfasst, und das Bergbaufahrzeug ein autonom fahrendes Fahrzeug ist und die Einrichtung dazu konfiguriert ist, den Kalibrierungsvorgang durchzuführen, um das autonome Fahren des mobilen Bergbaufahrzeugs durchzuführen.

10. Verfahren für ein Bergbaufahrzeug (10), das eine Karosserie, einen Stellantrieb, ein Arbeitsgerät und einen Scanner (36) umfasst, wobei der Stellantrieb mit dem Arbeitsgerät und der Karosserie verbunden ist und dazu angepasst ist, die Position des Arbeitsgeräts in Bezug auf die Karosserie zu ändern, wobei das Verfahren Folgendes umfasst:
- Durchführen einer Kalibrierungsaktion eines Kalibrierungsvorgangs für das Bergbaufahrzeug,
- Empfangen von Scandaten der Kalibrierungsaktion auf der Grundlage eines Umgebungsscans, das durch den Scanner der Kalibrierungsaktion durchgeführt wird, wobei die Scandaten mindestens eine Position eines Arbeitsgerätabschnitts des Arbeitsgeräts in Bezug auf einen Karosserieabschnitt der Karosserie anzeigen,
- Empfangen von Kalibrierungsüberprüfung-Referenzdaten, die mindestens eines einer Kalibrierungszielposition des Arbeitsgerätabschnitts in Bezug auf den Karosserieabschnitt für die Kalibrierungsaktion oder eines Zielbewegungsbereichs des Arbeitsgerätabschnitts in Bezug auf den Karosserieabschnitt für die Kalibrierungsaktion anzeigen,
- Verarbeiten der Scandaten und der Kalibrierungsüberprüfung-Referenzdaten, um mindestens eine einer Abweichung der aktuellen Position des Arbeitsgerätabschnitts von der Kalibrierungszielposition oder einer Abweichung des aktuellen Bewegungsbereichs des Arbeitsgerätabschnitts von dem Zielbewegungsbereich zu bestimmen; und
- Überprüfen des Kalibrierungsvorgangs auf der Grundlage der bestimmten mindestens einen Abweichung.

11. Verfahren nach Anspruch 10, wobei die Kalibrierungsaktion das Steuern des Arbeitsgerätabschnitts umfasst, um eine Trajektorie von einer Startposition zu der Kalibrierungszielposition durchzuführen, und die Kalibrierungsüberprüfung-Referenzdaten einen oder mehrere Schwellenparameter definieren, um die zulässige Abweichung des Arbeitsgerätabschnitts von der Kalibrierungszielposition nach Durchführen der Kalibrierungsaktion zu bestimmen.

12. Verfahren nach Anspruch 10 oder 11, wobei die Scandaten ein Hindernis anzeigen, wobei das Verfahren weiter umfasst:
- Bestimmen, ob das Arbeitsgerät trotz des Hindernisses in der Lage ist, die Kalibrierungszielposition zu erreichen oder den Zielbewegungsbereich durchzuführen, und
- als Reaktion auf das Erkennen, dass das Arbeitsgerät aufgrund des Hindernisses nicht in der Lage ist, die Kalibrierungszielposition zu erreichen oder den Zielbewegungsbereich durchzuführen, eine Änderung der Kalibrierungszielposition oder des Zielbewegungsbereichs zu steuern, das Bergbaufahrzeug derart zu steuern, dass es eine zweite Kalibrierungsaktion basierend auf der geänderten Kalibrierungszielposition oder dem Zielbewegungsbereich durchführt, und den Kalibrierungsvorgang basierend auf dem Verarbeiten von Scandaten der zweiten Kalibrierungsaktion und der geänderten Kalibrierungszielposition oder des Zielbewegungsbereichs zu überprüfen.

13. Verfahren nach einem vorstehenden Anspruch, das weiter Folgendes umfasst: Bestimmen des Positionsunterschieds zwischen dem Arbeitsgerätabschnitt und dem Karosserieabschnitt auf der Grundlage des Verarbeitens der Scandaten und Überprüfens des Kalibrierungsvorgangs auf der Grundlage des bestimmten Positionsunterschieds und der Kalibrierungsüberprüfung-Referenzdaten.

14. Verfahren nach einem vorstehenden Anspruch, wobei die Scandaten gescannte Punktwolkendaten umfassen und das Bestimmen der mindestens einen Abweichung Folgendes umfasst:
- Empfangen von Referenz-Punktwolkendaten des Arbeitsgerätabschnitts und des Karosserieabschnitts,
- Verarbeiten der gescannten Punktwolkendaten und der gescannten Referenz-Punktwolkendaten, um einen Punktwolken-Abgleichvorgang durchzuführen, um den Arbeitsgerätabschnitt und den Karosserieabschnitt in den gescannten Punktwolkendaten zu erkennen,
- Verarbeiten der gescannten Punktwolkendaten, um einen Abstand zwischen dem erkannten Arbeitsgerätabschnitt und dem Karosserieabschnitt in den gescannten Punktwolkendaten zu bestimmen.

15. Computerprogramm, umfassend Code, der, wenn in einer Datenverarbeitungseinrichtung ausgeführt wird, die Einrichtung dazu veranlasst, das Verfahren nach einem der Ansprüche 10 bis 14 durchzuführen.

## Revendications

1. Appareil pour un véhicule d'exploitation minière (10) comprenant une carrosserie, un actionneur, un outil de travail et un scanner (36), dans lequel l'actionneur est relié à l'outil de travail et à la carrosserie et est conçu pour modifier la position de l'outil de travail par rapport à la carrosserie, l'appareil comprenant au moins un processeur et au moins une mémoire incluant un code de programme informatique, la au moins une mémoire et le code de programme informatique étant configurés pour amener, avec le au moins un processeur, l'appareil au moins à :
- effectuer une action d'étalonnage d'une procédure d'étalonnage pour le véhicule d'exploitation minière,
- recevoir des données de balayage de l'action d'étalonnage sur la base d'un balayage de l'environnement effectué par le scanner de l'action d'étalonnage, dans lequel les données de balayage indiquent au moins une position d'une partie d'outil de travail par rapport à une partie de carrosserie de la carrosserie,
- recevoir des données de référence de vérification d'étalonnage indiquant au moins une d'une position cible d'étalonnage de la partie d'outil de travail par rapport à la partie de la carrosserie pour l'action d'étalonnage ou d'une plage de mouvement cible de la partie d'outil de travail par rapport à la partie de la carrosserie pour l'action d'étalonnage,
- traiter les données de balayage et les données de référence de vérification d'étalonnage pour déterminer au moins un d'un écart de la position actuelle de la partie d'outil de travail par rapport à la position cible d'étalonnage ou d'un écart de la plage de mouvement actuelle de la partie d'outil de travail par rapport à la plage de mouvement cible ; et
- vérifier la procédure d'étalonnage sur la base du au moins un écart déterminé.

2. Appareil selon la revendication 1, dans lequel l'action d'étalonnage comprend la commande de la partie d'outil de travail pour effectuer une trajectoire depuis une position de départ jusqu'à la position cible d'étalonnage, et les données de référence de vérification d'étalonnage définissent un ou plusieurs paramètres de seuil pour déterminer un écart admissible de la partie d'outil de travail par rapport à la position cible d'étalonnage après la réalisation de l'action d'étalonnage.

3. Appareil selon la revendication 1 ou 2, dans lequel les données de balayage indiquent un obstacle et la au moins une mémoire et le code de programme informatique sont configurés pour amener, avec le au moins un processeur, l'appareil à déterminer si l'outil de travail permet d'atteindre la position cible d'étalonnage ou d'effectuer la plage de mouvement cible malgré l'obstacle.

4. Appareil selon la revendication 3, dans lequel la au moins une mémoire et le code de programme informatique sont configurés pour amener, avec le au moins un processeur, l'appareil, à la suite de la détection que l'outil de travail ne permet pas atteindre la position cible d'étalonnage ou effectuer la plage de mouvement cible en raison de l'obstacle, à commander un changement de la position cible d'étalonnage ou de la plage de mouvement cible, à commander le véhicule d'exploitation minière pour effectuer une seconde action d'étalonnage sur la base de la position cible d'étalonnage modifiée ou de la plage de mouvement cible, et à vérifier la procédure d'étalonnage sur la base du traitement de données de balayage de la seconde action d'étalonnage et de la position cible d'étalonnage modifiée ou de la plage de mouvement cible.

5. Appareil selon une quelconque revendication précédente, dans lequel la au moins une mémoire et le code de programme informatique sont configurés pour amener, avec le au moins un processeur, l'appareil à :
- déterminer une différence de position entre la partie d'outil de travail et la partie de carrosserie sur la base du traitement des données de balayage, et
- vérifier la procédure d'étalonnage sur la base de la différence de position déterminée et des données de référence de vérification de l'étalonnage.

6. Appareil selon une quelconque revendication précédente, dans lequel les données de balayage comprennent des données de nuage de points balayées et la détermination du au moins un écart comprend :
- la réception de données de nuage de points de référence de la partie d'outil de travail et de la partie de carrosserie,
- le traitement des données de nuage de points balayés et les données de nuage de points de référence balayés pour effectuer une opération de correspondance de nuage de points pour détecter la partie d'outil de travail et la partie de carrosserie dans les données de nuage de points balayés, et
- le traitement des données de nuage de points balayés pour déterminer une distance entre la partie d'outil de travail détectée et la partie de carrosserie dans les données de nuage de points balayés.

7. Appareil selon une quelconque revendication précédente 1 à 4, dans lequel les données de balayage et les données de référence de vérification d'étalonnage comprennent des données d'image, et
le traitement des données de balayage et des données de référence de vérification de l'étalonnage comprend le traitement des données d'image pour :
- détecter la partie d'outil de travail dans une image des données de balayage et dans une image de référence des données de référence de vérification d'étalonnage, et
- déterminer l'écart sur la base de la différence détectée de la partie d'outil de travail dans l'image des données de balayage et dans l'image de référence.

8. Appareil selon une quelconque revendication précédente, dans lequel les données de référence comprennent des données de capteur de position provenant d'un capteur de position de l'outil de travail, les données de capteur de position indiquant la position de l'outil de travail par rapport à la partie de carrosserie.

9. Appareil selon une quelconque revendication précédente, dans lequel l'outil de travail comprend un godet ou une plate-forme d'une charge et/ou d'un véhicule de transport, et le véhicule d'exploitation minière est un véhicule à conduite autonome et l'appareil est configuré pour effectuer la procédure d'étalonnage pour effectuer une conduite autonome du véhicule d'exploitation minière mobile.

10. Procédé pour un véhicule d'exploitation minière (10) comprenant une carrosserie, un actionneur, un outil de travail et un scanner (36), dans lequel l'actionneur est relié à l'outil de travail et à la carrosserie et est conçu pour changer la position de l'outil de travail par rapport à la carrosserie, le procédé comprenant :
- la réalisation d'une action d'étalonnage d'une procédure d'étalonnage pour le véhicule d'exploitation minière,
- la réception de données de balayage de l'action d'étalonnage sur la base d'un balayage de l'environnement effectué par le scanner de l'action d'étalonnage, dans lequel les données de balayage indiquent au moins une position d'une partie d'outil de travail par rapport à une partie de carrosserie dde la carrosserie,
- la réception de données de référence de vérification d'étalonnage indiquant au moins une d'une position cible d'étalonnage de la partie d'outil de travail par rapport à la partie de carrosserie pour l'action d'étalonnage ou d'une plage de mouvement cible de la partie d'outil de travail par rapport à la partie de carrosserie pour l'action d'étalonnage,
- le traitement des données de balayage et des données de référence de vérification d'étalonnage pour déterminer au moins un d'un écart de la position actuelle de la partie d'outil de travail par rapport à la position cible d'étalonnage ou d'un écart de la plage de mouvement actuelle de la partie d'outil de travail par rapport à la plage de mouvement cible ; et
- la vérification de la procédure d'étalonnage sur la base du au moins un écart déterminé.

11. Procédé selon la revendication 10, dans lequel l'action d'étalonnage comprend la commande de la partie d'outil de travail pour effectuer une trajectoire depuis une position de départ jusqu'à la position cible d'étalonnage, et les données de référence de vérification d'étalonnage définissent un ou plusieurs paramètres de seuil pour déterminer un écart admissible de la partie d'outil de travail par rapport à la position cible d'étalonnage après la réalisation de l'action d'étalonnage.

12. Procédé selon la revendication 10 ou 11, dans lequel les données de balayage indiquent un obstacle, le procédé comprenant en outre :
- la détermination pour savoir si l'outil de travail permet d'atteindre la position cible d'étalonnage ou d'effectuer la plage de mouvement cible malgré l'obstacle, et
- à la suite de la détection que l'outil de travail ne permet pas d'atteindre la position cible d'étalonnage ou d'effectuer la plage de mouvement cible en raison de l'obstacle, la commande d'un changement de la position cible d'étalonnage ou de la plage de mouvement cible, la commande du véhicule d'exploitation minière pour effectuer une seconde action d'étalonnage sur la base de la position cible d'étalonnage modifiée ou de la plage de mouvement cible, et la vérification de la procédure d'étalonnage sur la base du traitement des données de balayage de la seconde action d'étalonnage et de la position cible d'étalonnage modifiée ou de la plage de mouvement cible.

13. Procédé selon une quelconque revendication précédente, comprenant en outre : la détermination d'une différence de position entre la partie d'outil de travail et la partie de carrosserie sur la base du traitement des données de balayage, et la vérification de la procédure d'étalonnage sur la base de la différence de position déterminée et des données de référence de vérification d'étalonnage.

14. Procédé selon une quelconque revendication précédente, dans lequel les données de balayage comprennent des données de nuage de points balayés et la détermination du au moins un écart comprend :
- la réception de données de nuage de points de référence de la partie d'outil de travail et de la partie de carrosserie,
- le traitement des données de nuage de points balayés et des données de nuage de points de référence balayés pour effectuer une opération de correspondance de nuage de points pour détecter la partie d'outil de travail et la partie de carrosserie dans les données de nuage de points balayés,
- le traitement des données de nuage de points balayés pour déterminer une distance entre la partie d'outil de travail détectée et la partie de carrosserie dans les données de nuage de points balayés.

15. Programme informatique comprenant un code pour amener, lorsqu'il est exécuté dans un appareil de traitement de données, l'appareil à réaliser le procédé selon l'une quelconque des revendications 10 à 14.
